# EUROPÄISCHE PATENTANMELDUNG

(11) **EP 0 854 198 A1**
(43) Veröffentlichungstag der Anmeldung: **22.07.1998**
(21) Anmeldenummer: 98890005.6
(22) Anmeldetag: 12.01.1998
(51) Int. Cl.: C22B 7/00, C22B 21/00, F27B 3/18, F27D 3/00, F27D 13/00, C21C 5/56

(54) **Verfahren und Vorrichtung zum Fördern und Einschmelzen von Leichtmetallschrott geringer Grösse**

(30) Priorität: 15.01.1997 AT 55/97
(71) Anmelder: Machner & Saurer GmbH, 8605 Kapfenberg (AT)
(72) Erfinder: Kos, Bernd, Dr., 8700 Leoben (AT)

(57) **Zusammenfassung**

Zum kontinuierlichen Einschmelzen von mit organischen Stoffen kontaminiertem Abfall und dergleichen ist zur Vermeidung von Umweltbelastungen vorgesehen, diesen durch ein Fördermittel (3) einer Zuführungseinrichtung aus einem verschließbaren Gehäuse (2) in eine überhitzte und bewegte Metallschmelze (11) einzubringen und zu schmelzen, wobei die bei der Erwärmung bis zum Aufschmelzen der Leichtmetallteile entstehenden Schadstoffe der Gase und Dämpfe in einer Abgasreinigungs- oder Separiereinrichtung (5) zumindest teilweise neutralisiert oder abgeschieden und/oder einer Hochtemperaturanlage (8) zugeführt und in dieser verbrannt werden.

## Beschreibung

Die Erfindung betrifft ein Verfahren zum vorzugsweise kontinuierlichen Einschmelzen von Leichtmetallteilen mit geringer Größe und/oder geringem Querschnitt, insbesondere von mit organischen Stoffen kontaminiertem Abfall, beispielsweise Metallspäne stammend von einer mechanischen Bearbeitung von Werkstücken oder gequetschten Getränkedosen, aus Aluminium und Aluminiumlegierungen.

Weiters umfaßt die Erfindung eine Vorrichtung, insbesondere zur Durchführung obigen Verfahrens, mit im wesentlichen einem beheizbaren metallurgischen Schmelzgefäß und einer Einrichtung zum Zuführen der Leichtmetallteile unter die Schmelzenoberfläche mittels eines Förderrohres.

Konstruktionsteile, Kleinelemente, Gefäße, Behältnisse und dergleichen Teile werden im zunehmenden Maße aus Leichtmetallen, insbesondere aus Aluminium und Aluminiumlegierungen hergestellt. Leichtmetalle haben die Vorteile einer guten Be- und Verarbeitbarkeit, sind korrosions- und splittersicher, weisen Geschmacksneutralität auf und besitzen vorteilhaft ein geringes spezifisches Gewicht.

Bei einer Fertigung der Teile fallen naturgemäß Schrottstücke an oder es entsteht beim Drehen, Fräsen, Bohren und dgl. Spanschrott. Leichtmetallschrott, wozu auch geleerte Getränkedosen, Konservendosen, Behälter sowie Hackteile u.a.m. zählen, stellt ein wichtiges und wirtschaftliches Ausgangsmaterial für eine Flüssigmetallgewinnung dar, weil ein Recyclieren dieser Stoffe höchst energiesparend ist. Weiters sind mit einer Wiedergewinnung der leichten Metalle aus Schrott eine Entlastung der Umwelt , Vorteile in der Abfallwirtschaft und eine weitgehende Vermeidung von Deponiekosten des Metalles verbunden.

Beim Einschmelzen von Schrott, insbesondere mit einem hohen Verhältnis von Oberfläche zu Gewicht, also von feinen bzw. kleinen Schrotteilen, an Luft treten jedoch hohe Oxidationsverluste auf, weil Leichtmetalle eine sehr hohe Affinität zu Sauerstoff besitzen. Durch die Oxidation wird aber nicht nur das Metallausbringen verkleinert,wodurch es sich verschlechtert, sondern es vergrößert sich auch der Schlacken- bzw. Krätzenanfall vergrößert, was eine Steigerung der Entsorgungsprobleme dieser Stoffe bewirkt.

Zur Minimierung der Oxidation ist bekannt ( US-Patent Nr. 4702768 sowie Submerge Melt Technique for Aluminum Scrap, Light Metals 1992. San Diego, California, USA, 1-5 Mar.1992, The Minerals, Metals & Materials Society, 420 Commonwealth Dr., Warrendale, Pennsylvania 15086, USA, 1992, 9206-72-273, 877-879), Aluminiumspäne durch ein rohrfömriges Einbringmittel unter die Oberfläche in eine flüssige Schmelze zu drücken und dadurch die Abbrandverluste weitgehend zu vermeiden, wobei ein hohes Metallausbringen beim Einschmelzen des Leichtschrottes erreicht wird.

Leichtmetallschrott, ob jetzt Spanschrott mit Zerspanungsölen oder Dosenschrott mit zum Teil dekorierenden Lackbeschichtungen oder Inhaltsresten, ist in den meisten Fällen mit organischen Verbindungen kontaminiert. Diese dem Schrott anhaftenden Stoffe bilden beim Erwärmen auf Schmelzetemperatur des Metalles störende und/oder toxische flüchtige Reaktionsprodukte und können zu erheblichen Umweltbelastungen führen. Zur Vermeidung dieser Umweltbelastungen kann es, insbesondere beim Einschmelzen von Schrott in der Hütte erforderlich sein, die anfallenden Abgase zu sammeln und zu reinigen, was auf Grund der erheblichen Gasmengen zumeist nicht vollkommen erfolgt und/oder mit hohem Aufwand verbunden ist.

Für ein Einschmelzen von Getränkedosen wurde schon, wie aus der Literatur (Aluminium Beverage Can Recycling in Sweden by Lage Knuttson nd Gösta Sjöberg, presented at The Recycling Of Metals, Düsseldorf, 13 -15 May 1992) bekannt ist, vorgeschlagen und erprobt, in einem ersten Schritt eine Lackentfernung in einem eigenen, im wesentlichen geschlossenen, Ofen durch Glühung des Einsatzes vorzunehmen und den so vorbehandelten Schrott in einem zweiten Schritt einzuschmelzen. Die dabei entstehenden Schadstoffe in den Abgasen werden teilweise verbrannt, anschließend durch chemische Reaktionen neutralisiert, abgeschieden und entsorgt.

Durch einen zusätzlichen Schritt einer Schrottbearbeitung bzw.- reinigung vor dem Einschmelzen im Zusammenhang mit einer intensiven Behandlung der Abgase von den Behandlungs- und Schmelzaggregaten kann den Umweltbelastungen, insbesondere bei einem Verwerten von kontaminiertem Schrott durchaus wirkungsvoll entgegengetreten werden, allerdings sind dafür große zeitliche, technische und finanzielle Aufwendungen erforderlich, weil hohe Abgasvolumina behandelt bzw. gereinigt werden müssen.

Aufgabe der vorliegenden Erfindung ist nun ein Verfahren und eine Vorrichtung der eingangs genannten Art zu schaffen, welche es ermöglichen, Leichtmetallteile, insbesondere kontaminierten Leichtmetallschrott, wirtschaftlich sowie umweltschonend einzuschmelzen.

Diese Aufgabe wird bei einem gattungsgemäßen Verfahren dadurch gelöst, daß die Leichtmetalle aus einem verschließbaren bzw. geschlossenen Gehäuse einer Zuführungseinrichtung durch ein Fördermittel in eine überhitzte und strömende Metallschmelze bei Verhinderung eines Luft- bzw. Sauerstoffzutrittes eingebracht und geschmolzen werden, wobei die bei einer Erwärmung bis zum Aufschmelzen der Teile entstehenden Gase und Dämpfe aus dem Förderrohr und dem verschließbaren Gehäuse ausgetragen, in eine Abgasreinigungs -oder Separiereinrichtung eingebracht und die Inhaltsstoffe der Gase und Dämpfe zumindest teilweise abgeschieden und/oder einer Hochtemperaturanlage zugeführt und verbrannt werden.

Die Vorteile des neuen Verfahrens liegen insbesondere darin, daß eine hohe Einschmelzgeschwindigkeit durch die, die Schrotteile umströmende, überhitzte Metallschmelze erreicht werden kann und somit auch entsprechend große Zuführungs- oder Durchführungsraten von Schrott durch das Förderrohr aus schmelztechnischen Gründen erreichbar sind. Beim Aufwärmen der zur Metallschmelze hinbewegten, kompaktieren Schrotteile im Förderrohr werden trotz hoher Durchführungsrate die gebildeten flüchtigen Bestandteile und Reaktionsprodukte der Kontaminationsstoffe in die Gegenrichtung geleitet, in das Gehäuse eingebracht, in der Folge von diesem ausgetragen und einer Separierungseinrichtung zugeführt. Dabei schützen diese Gase und Dämpfe die Inhaltsstoffe oder der nach einer Kondensation verbleibende Teil der bei der Erwärmung der Leichtmetallteile entstehenden Gase und Dämpfe verbrannt, insbesondere abgefackelt werden.

Für eine sichere Durchführung einer Abscheidung von Umweltgiften kann es auch vorteilhaft sein, wenn der atmosphäriche Druck im Förderrohr, insbesondere mittels eines Druckreglers in der Rohrverbindung zur Abgasverbrennungsanlage, derart eingestellt und geregelt wird, daß im wesentlichen keine bei der Erwärmung der Leichtmetallteile gebildete Gas und Dämpfe schmelzenseitig aus dem Förderrohr austreten.

Bei einer Einrichtung der eingangs genannten Art wird die weitere Aufgabe der Erfindung dadurch einer Lösung zugeführt, daß zur Verhinderung von Umweltbelastungen bzw. bei Abscheidung von bei einer Erhitzung entstehenden störenden und/oder toxischen Stoffen das die Metallschmelze berührende oder in diese hineinragende Förderrohr im wesentlichen gasdicht mit einem verschließbaren Gehäuse einer Zuführeinrichtung für kleine Leichtmetallteile verbunden ist, welches Gehäuse mindestens eine Einbringschleuse für ein Chargieren der Zuführungseinrichtung und mindestens einen Anschluß für ein Abgasaustragsrohr besitzt, wobei das angeschlossene Austragsrohr in mindestens einen Abgasreiniger oder Abscheider mit einem Stoffaustrag mündet und der/die Reiniger oder Abscheider ausgangsseitig über einen Druckregler eine Rohrverbindung mit einer Abgas-Verbrennungsanlage aufweist ( aufweisen) oder das angeschlossene Austragsrohr direkt an eine Abgas-Verbrennungsanlage angeschlossen ist.

Die Vorteile der erfindunsgsgemäß so konzipierten Einrichtung sind im wesentlichen darin zu sehen, daß auch für eine hohe Effizienz der Abscheidung der Umweltgifte bzw. des die Umwelt nachteilig beeinflussenden Ausstoßes beim Einschmelzen von Leichtmetallschrott aufweisenden Anlagen deren Ausmaße und Aufwendungen klein gehalten werden können. Daraus ergeben sich auch eine hohe Flexibilität, geringe Aufwendungen für eine Nachrüstung bestehender Anlagen und insgesamt besonders vorteilhafte Aspekte für ein energiesparendes Verwerten von Leichtmetallschrott mit einer weiteren Kompetenzsteigerung der Abfallwirtschaft.

Dabei ist es erfindungswesentlich, daß der Anschluß des Förderrohres an das Gehäuse, die Zuführungseinrichtung bzw. die Einbringschleuse für den Leichtmetallschrott und der Abscheider gasdicht miteinander verbunden sind und/oder einen im Vergleich mit dem Atmosphärendruck geringeren inneren Gasdruck aufweisen. Die Einrichtungsteile sind dabei aus Werkstoffen hergestellt, welche den jeweiligen Temperatur- und/oder Korrosionsbeanspruchungen standhalten. Eine Neutralisation der abgeschiedenen Austragsstoffe sowie ein Verbrennen oder Abfackeln der Restgase sind chemisch und anlagentechnisch bekannt.

Eine besonders wirksame Ausführungsform der Einrichtung wird erreicht, wenn der Abscheider für Inhaltsstoffe der bei einer Erwärmung der Leichtmetallteile gebildeten Gase und Dämpfe als Kondensator ausgebildet ist. Dabei kann die Gaskühlung bei wählbaren Temperaturen und Drücken gegebenenfalls kaskadenartig erfolgen und gewünschte Fraktionen erbringen.

Hinsichtlich einer sicheren und kontinuierlichen Einbringung des Leichtmetallschrottes kann es schließlich vorteilhaft sein, wenn die Vorrichtung zur Zuführung der Leichtmetallteile im wesentlichen als Schneckenförderer ausgebildet ist.

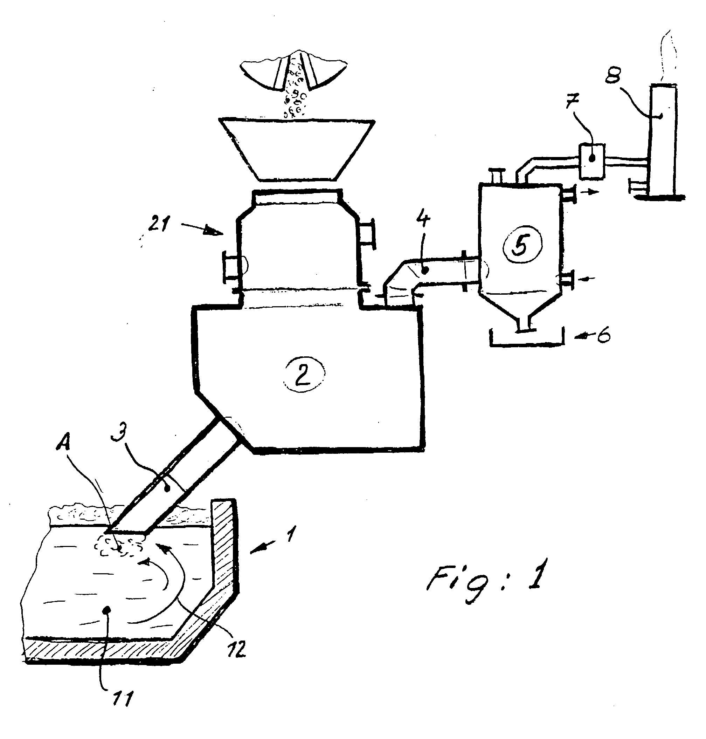

Im folgenden wird die Erfindung anhang von lediglich einen Ausführungsweg darstellenden Zeichnung näher erläutert.
Es zeigt Fig. 1 eine Vorrichtung zum kontinuierlichen Einschmelzen von Leichtmetallschrott schematisch.

In einem Schmelzgefäß 1 befindet sich flüssiges Leichtmetall 11, welches zumindest im Bereich A einer Zuführung für festen Leichtmetallschrott eine Relativbewegung 12 zu dieser aufweist. Durch ein Förderrohr 3 oder dergleichen wird ein feinstückiger, gegebenenfalls kompaktierter Schrott unter die Oberfläche der Schmelze 11 eingebracht, wobei das Rohr 3 einerseits ein für die Schmelze unauflösliches Einbringstück aufweist, andererseits mit einem verschließbaren Gehäuse 2 gasdicht verbunden ist. Das verschließbare Gehäuse 2 ist mit einer Schleuse 21 bzw. einem Schleusensystem verbunden, welche bzw. welches es gestattet, Schrott, zum Beispiel Aluminium- Spanschrott, einzubringen, ohne daß die Umwelt schädigende flüchtige Stoffe aus dem Gehäuse 2 austreten. Im Gehäuse 2 ist eine an sich bekannte Zuführungseinrichtung, in welche der Leichtmetallschrott eingebracht, gegebenenfalls verdichtet, und mit welcher dieser durch ein Fördermittel 3 bzw. Rohr, gegebenenfalls mittels einer Förderschnecke oder dergleichen, ausgetragen wird. Das Gehäuse 2 ist weiters über ein Abgasaustragsrohr 4 mit einem Abscheider 5 verbunden, welcher Abscheider 5 einen Stoffaustrag 6 für zum Beispiel Kondensate oder dergleichen Schadstoffe beinhaltet. Dem Gasweg folgend ist zwischen Abscheider 5 und einer Abgasverbrennungsanlage 8 ein Druckregler 7 angeordnet, durch welchen ein Gasdruck im vorgeordneten System einstellbar ist. Es kann mit dem Druckregler 7 beispielsweise der Gasdruck im verschließbaren Gehäuse 2 und folglich am Ausgang des Förderrohres 3 derart eingestellt werden, daß keine flüchtigen Schadstoffe, die von einer Zerlegung der Kontaminationen des Schrottes stammen, in die Umwelt gelangen können. Es kann auch im Bereich des Austragsrohres 4 ein Druckregler 7 angeordnet sein, so daß in einem kühlbaren Abscheider 5 bestimmte Abgasfraktionen durch Kondensation abscheidbar sind. Der geringen mit der erfindungsgemäßen Einrichtung bzw. mit dem erfindungsgemäßen Verfahren erreichbaren Abgasvolumina beim Einschmelzen von kontaminierten Feinschrott wegen, kann es auch möglich sein, ein Austragsrohr 4 vom verschließbaren Gehäuse 2 direkt an einen Druckregler 7 anzuschließenden und ohne Abscheidung bzw. Teilabscheidung von Schadstoffen diese direkt durch Abfackeln für die Umwelt unschädlich zu machen.

## Patentansprüche

1. Verfahren zum vorzugsweise kontinuierlichen Einschmelzen von Leichtmetallteilen mit geringer Größe und/oder geringem Querschnitt, insbesondere von mit organischen Stoffen kontaminiertem Abfall, beispielsweise Metallspäne stammend von einer mechanischen Bearbeitung von Werkstücken, und/oder dergleichen Schrott, wie geleerten gegebenenfalls zerkleinerten oder gequetschten Getränkedosen, aus Aluminium und Aluminiumlegierungen, **dadurch gekennzeichnet**, daß die Leichtmetallteile (A) aus einem verschließbaren bzw. geschlossenen Gehäuse (2) einer Zuführungseinrichtung durch ein Fördermittel (3) in eine überhitzte und strömende Metallschmelze (11) bei Verhinderung eines Luft- bzw. Sauerstoffzutrittes eingebracht und geschmolzen werden, wobei die bei einer Erwärmung bis zum Aufschmelzen der Teile entstehenden Gase und Dämpfe aus dem Förderrohr (3) und dem Gehäuse (2) ausgetragen, in eine Abgasreinigungs- oder Separiereinrichtung (5) eingebracht und die Inhaltsstoffe der Gase und Dämpfe zumindest teilweise abgeschieden und/oder einer Hochtemperaturanlage (8) zugeführt und verbrannt werden.

2. Verfahren nach Anspruch 1, **dadurch gekennzeichnet**, daß die Metallschmelze (11) auf eine Temperatur von mindestens 5°C, insbesondere von mindestens 20 °C, über die Liquidustemperatur der Legierung erwärmt und an der Einbringestelle der festen Leichtmetallteile (A) einer Bewegung von mindestens 1,2 m/min unterworfen wird.

3. Verfahren nach Anspruch 1 oder 2, **dadurch gekennzeichnet**, daß die Leichtmetallteile diskontinuierlich mittels einer Einbringschleuse 21 in das Gehäuse (2) der Zuführungseinrichtung vorzugsweise unter Vermeidung von Gasaustritt, einen erforderlichen Vorrat bildend, eingesetzt und weitgehend kontinuierlich einer Metallschmelze (11) zugeführt werden.

4. Verfahren nach einem der Ansprüche 1 bis 3, **dadurch gekennzeichnet**, daß die Inhaltsstoffe der bei der Erwärmung der mit organischen Stoffen kontaminierten Leichtmetallteile, Gase und Dämpfe zumindest teilweise in einer als Kondensations- anlage (5) ausgebildeten Separiereinrichtung abgeschieden und die Stoffe im Austrag (6) anschließend neutralisiert oder entsorgt werden.

5. Verfahren nach einem der Ansprüche 1 bis 4, **dadurch gekennzeichnet** , daß die Inhaltsstoffe oder der nach einer Kondensation verbleibende Teil der bei der Erwärmung der Leichtmetallteile entstehenden Gase und Dämpfe verbrannt, insbesondere abgefackelt werden.

6. Verfahren nach einem der Ansprüche 1 bis 5, **dadurch gekennzeichnet**, daß der atmosphärische Druck im Förderrohr (3), insbesondere mittels eines Druckreglers (7) in der Rohrverbindung zur Abgasverbrennungsanlage (8), derart eingestellt und geregelt wird, daß im wesentlichen keine bei der Erwärmung der Leichtmetallteile (A) gebildete Gase und Dämpfe schmelzenseitig aus dem Förderrohr (3) austreten.

7. Vorrichtung zum vorzugsweise kontinuierlichen Einschmelzen von Leichtmetallteilen (A) mit geringer Größe und/oder mit geringem Querschnitt, insbesondere von mit organischen Stoffen kontaminiertem Abfall, beispielsweise Metallspäne stammend von einer mechanischen Bearbeitung von Werkstücken und/oder dergleichen Schrott, wie geleerte, gegebenenfalls zerkleinerte oder gequetschte Getränkedosen aus Aluminium und Aluminiumlegierungen mit im wesentlichen einem beheizbaren metallurgischen Schmelzgefäß (1) und einer Einrichtung zum Zuführen der Leichtmetallteile unter die Schmelzenoberfläche mittels eines Förderrohres (3) oder dergleichen, insbesondere zur Durchführung des Verfahrens gemäß einem der Ansprüche 1 bis 6, **dadurch gekennzeichnet**, daß das die Metallschmelze (11) berührende oder in diese hineinragende Förderrohr (3) im wesentlichen gasdicht mit einem verschließbaren Gehäuse (2) einer Zuführeinrichtung für kleine Leichtmetallteile (A) verbunden ist, welches Gehäuse (2) mindestens eine Einbringschleuse (21) für ein Chargieren der Zuführungseinrichtung und mindestens einen Anschluß für ein Abgasaustragsrohr (4) besitzt, wobei das angeschlossene Austragsrohr (4) in mindestens einen Abgasreiniger oder Abscheider (5) mit einem Stoffaustrag (6) mündet und der/die Reiniger oder Abscheider (5) ausgangsseitig über einen Druckregler (7) eine Rohrverbindung mit einer Abgas- Verbrennungsanlage (8) aufweist (aufweisen) oder das angeschlossene Austragsrohr (4) direkt an eine Abgas-Verbrennungsanlage (8) angeschlossen ist.

8. Vorrichtung nach Anspruch 7, **dadurch gekennzeichnet**, daß der Abscheider (5) für Inhaltsstoffe der bei einer Erwärmung der Leichtmetallteile gebildeten Gase und Dämpfe als Kondensator ausgebildet ist.

9. Vorrichtung nach Anspruch 7 oder 8, **dadurch gekennzeichnet**, daß die Abgas-Verbrennungsanlage (8) als Abfackelungseinrichtung ausgebildet ist.

10. Vorrichtung nach einem der Ansprüche 7 bis 9, **dadurch gekennzeichnet**, daß die Vorrichtung zur Zuführung der Leichtmetallteile im wesentlichen als Schneckenförderer ausgebildet ist.
